# EUROPÄISCHE PATENTSCHRIFT

(11) **EP 1 194 660 B1**
(45) Veröffentlichungstag und Bekanntmachung des Hinweises auf die Patenterteilung: **12.01.2005**
(21) Anmeldenummer: 00954343.0
(22) Anmeldetag: 18.07.2000
(51) Int. Cl.: E04D 3/08

(54) **Vorrichtung zur Verbindung zweier Profile**
Device for connecting two profiles
Dispositif pour le raccordement de deux profilés

(30) Priorität: 20.07.1999 DE 29912298 U
(43) Veröffentlichungstag der Anmeldung: 10.04.2002
(73) Patentinhaber: Eternit Flachdach Gmbh, 41464 Neuss (DE)
(72) Erfinder: HUKE, Carl-Josef, D-48599 Gronau (DE)
(74) Vertreter: Ackmann, Günther, Dr.
(86) Internationale Anmeldenummer: PCT/DE2000/002363
(87) Internationale Veröffentlichungsnummer: WO 2001/006073

(56) Entgegenhaltungen:
- EP-A- 0 637 657
- EP-A- 0 821 127
- DE-A- 2 820 306
- DE-A- 4 331 963
- DE-B- 1 079 290
- GB-A- 694 640
- GB-A- 702 593
- GB-A- 2 236 791
- US-A- 1 385 217

## Beschreibung

Die Erfindung betrifft eine Vorrichtung zur Verbindung zweier Profile, Insbesondere gebogenen Profilen für Verkleidungen, Fenster- und Türelemente, Dachklappen, Lichtbändern und -kuppeln, gemäß dem Oberbegriff von Anspruch 1.

Vorrichtungen der gattungsgemäßen Art sind bekannt und finden vor allem bei der Verglasung von Fenster- oder Türelementen und der Befestigung von Dachelementen, wie beispielsweise Lichtbändem oder -kuppeln, Anwendung. Das Glas oder die Dachelemente werden hierbei zwischen einem Unter- und einem Deckprofil eingefasst, wobei diese über eine Steckverbindung mittels unterschiedlich gestalteter Klemmelemente bzw. Verbindungselemente mitelnander verbunden sind. In Anpassung an unterschiedliche Materialstärken des Glases oder der Dachelemente werden dabei teilweise auch besonders ausgestaltete Zwischenstücke bzw. Verlängerungselemente verwendet

Aus der DE 43 31 963 ist beispielsweise eine Anordnung zur lösbaren Befestigung von ebenen Elementen beschrieben, bei der eine Befestigung ohne Verschraubung erfolgen kann. Die ebenen Elemente sind hier zwischen einem inneren Teil und einem äußeren Teil befestigt, wobei die beiden Teile über ein Verbindungselement, das als Einrastelement bezeichnet ist, miteinander verbunden sind. Die beiden Teile weisen jeweils Vorrichtungen auf, die mit dem Einrastelement korrespondieren, wobei die an den beiden Enden des Einrastelementes befindlichen Befestigungselemente eine lösbare Verbindung mit dem jeweils korrespondierenden Teil herstellen. Das Einrastelement weist an einem Ende zwei nach außen gerichtete Nasen auf, die entsprechende Ausnehmungen in dem äußeren Teil hintergreifen. Die beiden Nasen sind über einen Quersteg miteinander verbunden, welcher wiederum Ober zwei parallele Längsstege mit dem gegenüberliegenden Ende des Einrastelementes verbunden ist, wobei ein Längssteg auf den parallelen Längssteg zuläuft und dieser längere Steg an seinem freien Ende einen einseitig ausgerichteten Haken aufweist Dieser Haken rastet in eine raststufenartige Verzahnung des inneren Teils einseitig ein und stellt so die Verbindung zwischen dem äußeren und dem inneren Teil her. Diese Vorrichtung hat den Nachteil, dass aufgrund des nur einseitig In die Verzahnung eingreifenden Einrastelementes keine sehr hohe Stabilität der Vorrichtung gewährleistet werden kann. Eine sehr hohe Stabilität ist aber insbesondere bei Lichtbändem und anderen Dachelementen aufgrund der auftretenden Windbelastungen erforderlich. Darüber hinaus muss zur Demontage das äußere Tell gekippt werden, um die Verbindung zu lösen, was schwierig ist und vor allem bei sehr langen Abdeckprofilen zu Problemen führen kann.

Aus einem Produktkatalog der Firma Alberts aus dem Jahre 1996 sind Vorrichtungen zur Verbindung zweier Bauelemente in Form von Krampen oder Bauklammem bekannt, welche jedoch für spezielle Einsatzzwecke vorgesehen sind und weniger zum Verbinden zweier Profile für insbesondere gebogene Profile für Verkleidung, Fenster- und Türelemente oder dergleichen, gedacht sind.

Aus dem britischen Patent 694,640 ist ferner ein Federanker bekannt, der einerseits zwei um 90° Grad abgewinkelte Enden zum Hintergreifen einer Profilausnehmung aufweist und andererseits zwei einstückig angeformte Haltelaschen, die die einzuspannenden Glas- oder Kunststoffelemente auf das untere Profil drücken. Diese spezielle Vorrichtung dient somit lediglich dazu, Glas- oder Kunststoffelemente auf einem unteren Profil zu halten und kann nicht zur Verbindung eines oberen und unteren Profils eingesetzt werden.

Aus dem britischen Patent 702,593 ist eine Befestigungsvorrichtung zum Verbinden beispielsweise zweier abgewinkelter Bauelemente bekannt, welche aus aufsetzbaren Befestigungsklammern besteht, die zunächst die beiden Bauelemente zusammen halten und ferner ein auf die Befestigungsklammern aufsteckbares, gewölbtes Oberprofil aufweisen, welches mit seinen äußeren Flanken zum Niederhalten von Glas- oder Kunststoffelemente vorgesehen ist

Alternativ besteht die Möglichkeit, das unter den Glas- oder Kunststoffelementen ein Trägerprofil mit einem pfeilförmigen Ende eingesetzt wird, auf dem die obere Befestigungsvorrichtung unmittelbar mit zwei korrespondierenden Federhaken in eine Nut eingreift. Bei beiden Ausführungsvarianten wird lediglich mittels des unteren Profils bzw. der oberen Befestigungsvorrichtung ein Halten der Glas- oder Kunststoffelemente bewirkt, wobei die korrespondierenden Befestigungselemente unmittelbar an dem unteren bzw. oberen Profil ausgebildet sind. Die Verwendung einer separaten Befestigungsvorrichtung entfällt somit.

Aus der deutschen Offenlegungsschrift 28 02 306 ist eine Umrüstsprosse für Verglasungsträger bekannt, welche dazu verwendet wird, Glas- oder Kunststoffelemente auf einem unteren Trägerprofil mittels einer Befestigungsvorrichtung zu halten. Auf der Oberseite der Glas- oder Kunststoffpanelen befindet sich zu diesem Zweck ein U-förmig gebogenes Profil, welches mit zwei angeformten Schenkel die Glas- bzw. Kunststoffelemente fixiert, wobei das eigentliche Verbindungselement T-förmig ausgebildet ist und einen Kunststoffmantel mit Auflagepunkte für die Glas- bzw. Kunststoffelemente aufweist. Im Weiteren besitzt der Kunststoffmantel rastförmige Vertiefungen, in die Haltekrallen des oberen Profils nach der Montage eingreifen. Ähnlich wie in den vorgenannten Ausführungsbeispielen sind die Befestigungselemente unmittelbar an dem oberen U-förmigen Profil bzw. an dem unteren Trägerprofil ausgebildet, sodass keine Notwendigkeit besteht eine weiteren Vorrichtung zur Verbindung zweier Profile einzusetzen.

Ferner zeigt die Druckschrift EP 0 821 127 A eine Vorrichtung zur Befestigung zweier Profile.

Es ist daher Aufgabe der Erfindung eine Vorrichtung der gattungsgemäßen Art zu schaffen, bei der eine sehr hohe Stabilität der gesamten Vorrichtung bei weiterer Erleichterung von Montage und Demontage gewährleistet ist.

Erfindungsgemäß wird die Aufgabe dadurch gelöst, dass die Schenkel V-förmig sind.

Die beiden federelastischen Schenkel sind derart miteinander verbunden, dass sie leicht gegeneinander beweglich sind. Durch die federnde Anordnung können die Schenkel zusammengedrückt werden, wobei sie sich aufeinander zu bewegen und sich ihr Abstand an ihren freien Enden deutlich verringern lässt. Auf diese Weise kann der Verbindungsanker besonders leicht in das korrespondierende Befestigungselement des zweiten Profiles eingeführt werden. Beim Zurückschnappen der Schenkel In ihre Ausgangsposition wird dann Ober das Befestigungselement die Verbindung zum Profil hergestellt. Zur Entfernung der Verbindungsanker können diese vor der eigentliche Montage der beiden Bauelemente jederzeit durch einfaches Zusammendrücken der beiden Schenkel, worauf die Verbindung zwischen Profil und Verbindungsanker auf leichte und besonders vorteilhafte Weise wieder getrennt werden kann, herausgenommen werden. Das den freien Enden der Schenkel gegenüberliegende Ende des Verbindungsankers weist dem gegenüber Haltekrallen auf, die zum Einrasten in die Verzahnung des ersten Profiles vorgesehen sind. Diese Haltekrallen sind bewegbar und können so eingestellt werden, dass einerseits ein leichtes Einführen in das erste Profil und anderseits eine stabile Befestigung ermöglicht wird. Die Haltekrallen greifen in die Verzahnung des ersten Profiles ein und gewährleisten im Weiteren eine besonders stabile Befestigung. Durch die stufenartige Verzahnung ist darüber hinaus ein variables Anpassen der Vorrichtung an unterschiedliche Stärken von zwischen den Profilen angeordneten, flachen Elementen, wie beispielsweise extrudierten Stegplatten, Glasscheiben oder Dachelementen, möglich. Dabei kann der Verbindungsanker so weit in das erste Profil mit der raststufenartigen Verzahnung während der Montage eingeführt werden, bis ein formschlüssiges Einfassen der Elementes erfolgt. Die bewegbaren Befestigungsmittel können in besonders vorteilhafter Weise derart eingestellt werden, dass eine sehr stabile Verbindung entsteht, so dass beispielsweise bei der Befestigung zweier Profile zur Befestigung von Dachelementen eine sehr stabile Dachkonstruktion entsteht, die auch sehr hohen Belastungen standhält. Bei der erfindungsgemäßen Vorrichtung werden unter Verwendung des beschriebenen Verbindungsankers Auszugswerte von 120 kg erreicht, was eine außerordentliche Belastbarkeit bedeutet. Bei der Lagerung und beim Transport können ferner die Haltekrallen so angeordnet sein, dass sie in der Ebene der Schenkel liegen, so dass eine Beschädigung der Haltekrallen vermieden werden kann. Darüber hinaus kann durch die federnde Anordnung der Schenkel eine schnelle und einfache Montage bzw. Demontage erfolgen.

In weiterer Ausgestaltung der Erfindung ist vorgesehen, dass der Verbindungsanker als zweites Befestigungselement zumindest ein, vorzugsweise zwei, nach außen umgebogene Enden aufweist, welche in eine korrespondierende Ausnehmung des zweiten Profiles eingreifen. Die umgebogenen Enden des zweiten Befestigungselementes sind hierbei zum Eingriff in das korrespondierende Befestigungselement des zweiten Profiles vorgesehen. Sie dienen beispielsweise dazu, einen vorhandenen Steg, oder Vorsprung zu hintergreifen und ermöglichen somit eine sichere Befestigungsart.

In weiterer vorteilhafter Ausgestaltung der Erfindung ist vorgesehen, dass der Verbindungsanker zumindest einen ersten und einen zweiten Abschnitt aufweist, wobei der innere Winkel zwischen den annähernd V-förmig zueinander angeordneten Schenkeln im ersten Abschnitt größer als im zweiten Abschnitt ausgebildet ist. Durch diese Ausformung wird einerseits im ersten Abschnitt eine ausreichende Federvorspannung erzielt und andererseits im zweiten Abschnitt eine schlankere Form zum leichten Einführen in das Profil gewährleistet.

In vorteilhafter Ausgestaltung der Erfindung ist ferner vorgesehen, dass jeder Schenkel an seinem freien Ende als Befestigungsmittel einen U-förmig nach außen gebogenen Hakenbereich aufweist und dass die Schenkel am gegenüberliegenden Ende einstückig miteinander verbunden sind. Werden die Schenkel an ihren freien Enden hakenförmig nach außen gebogen, so wird hierdurch eine sehr hohe Stabilität der Befestigung erzielt. Durch die über die gesamte Breite verlaufenden Hakenbereiche wird darüber hinaus die Eigenstabilität des Verbindungsankers erhöht und ein Kippen desselben in der Vorrichtung verhindert. Die freien Enden der Schenkel sind ferner besonders leicht gegeneinander bewegbar, wenn sie am gegenüberliegenden Ende einstückig miteinander verbunden sind. Alternativ können die Schenkel in diesem Bereich auch miteinander verschweißt sein.

In weiterer vorteilhafter Ausgestaltung der Erfindung ist vorgesehen, dass die Schenkel am Ende des zweiten Abschnittes jeweils mit mindestens einer aus der Schenkelebene herausklappbaren und einstückig angeformten Haltekrallen versehen sind, wobei die Haltekrallen eine rechteckige oder abgerundete Form aufweisen. Hierbei muss die Größe des Verbindungsankers im zweiten Abschnitt an die Dimensionierung des korrespondierenden Befestigungselementes angepasst sein. Die Haltekrallen können dann im herausgeklappten Zustand den Verbindungsanker sicher und stabil in der raststufenartigen Verzahnung des ersten Profiles verankern. Dabei können die Haltekrallen beispielsweise rechteckig oder abgerundet ausgebildet sein.

Als besonders vorteilhaft hat sich für die erfindungsgemäße Funktion des Verbindungsankers eine Form herausgestellt, bei der die Schenkel an ihren freien Enden im ersten Abschnitt den größten Abstand voneinander aufweisen, in Richtung des entgegengesetzten Endes aufeinander zulaufen und dann den U-förmigen zweiten Abschnitt bilden, wobei die Schenkel in beiden Abschnitten Winkel einschließen, die in Verbindung mit der entsprechenden Länge des Verbindungsankers an den benötigten Abstand zwischen den Profilen und die Ausgestaltung derselben angepasst sind. Durch die variable Verwendung von Verbindungsankern mit unterschiedlicher Dimensionierung kann also die Befestigungsvorrichtung an unterschiedliche Konstruktionen angepasst werden. Beispielsweise bei der Befestigung von Dachelementen, wie z.B. Lichtbändern, zwischen den Profilen können für unterschiedliche Stärken der Dachelemente einfach entsprechend dimensionierte Verbindungsanker gewählt werden, die eine sichere Befestigung gewährleisten.

In weiterer vorteilhafter Ausgestaltung der Erfindung ist vorgesehen, dass der Verbindungsanker aus einem einstückigen, flachen und gebogenen Blech besteht, welches im zweiten Abschnitt Einschnitte oder Ausstanzungen aufweist, die den freien Rändern der Haltekrallen entsprechen.

Um den Verbindungsanker weiteren unterschiedlichen Erfordernissen anzupassen und eine gute Federwirkung zu erzielen, können die Schenkel ausschließlich oder zusätzlich im Übergangsbereich zwischen erstem und zweitem Abschnitt miteinander verbunden sein.

Um die Stabilität des Federankers zu erhöhen, kann das Blech zumindest eine, vorzugsweise zwei, in Längsrichtung verlaufende Aussteifungssicken im Übergang zwischen ersten und zweiten Abschnitt, in einem der Abschnitte und/oder im Hakenbereich aufweisen.

Hierbei kann der Verbindungsanker beispielsweise aus Federstahl oder Aluminiumblech bestehen. Durch diese Ausgestaltung ist einerseits die Stabilität und andererseits die Flexibilität des Verbindungsankers gewährleistet. Zur Ausformung der Haltekrallen werden in das Blech einfach Einschnitte vorgenommen, so dass eine einfache und kostengünstige Produktion möglich ist. In alternativer Ausgestaltung kann der Verbindungsanker auch aus Kunststoff bestehen, wobei ein Ende des zweiten Abschnittes, welches dem ersten Abschnitt abgewendet ist, Einschnitte aufweist. Solche Verbindungsanker aus Kunststoff können beispielsweise einstückig gegossen oder gespritzt werden. Um die Befestigungsmittel auf einfache Weise bewegbar zu machen und ein leichtes Herausklappen der Haltekrallen zu gewährleisten, ist in besonders vorteilhafter Ausgestaltung der Erfindung vorgesehen, dass der Verbindungsanker im Übergangsbereich von den Schenkeln zu den Haltekrallen eine verringerte Materialstärke durch eine Stanzung oder Einprägung aufweist.

Um die Verankerung des Verbindungsankers im zweiten Profil zu verbessern bzw. ein Verdrehen des Verbindungsankers während der Montage zu verhindern ist in weiterer vorteilhafter Ausgestaltung vorgesehen, dass in den Abschnitten nach der Montage im zweiten Profil zwischen den Enden des Verbindungsankers ein Verriegelungskeil eingesetzt ist. Die Verbindung des oberen Profils mit dem unteren Profil erfolgt in der Regel in der Weise, dass ein oder mehrere Verbindungsanker in das oben liegende Bauelement eingesetzt werden und dieses zusammen mit den Verbindungsankern in die stufenförmige Verzahnung des unteren Profils eingedrückt werden. Wenn die Verbindungsanker nicht korrekt in das oben liegende Profil zuvor eingesetzt werden, kann es während dem eigentlichen Montagevorgang dazu führen, dass einer der Verbindungsanker herausfällt oder herausgedrückt wird. Auf Grund des verwendeten Verriegelungskeil ist der Monteur jedoch gehalten, den Verbindungsanker richtig einzusetzen und mittels des Verriegelungskeils zu sichern, sodass das obere in der Regel relativ lange Profil auch unter ungünstigen Umständen die eingesetzten Verbindungsanker nicht verliert. Der Verriegelungskeil besteht hierbei aus einem rechteckförmigen Grundkörper welcher zwischen den Schenkeln des Verbindungsanker eingeklemmt wird und mit zwei seitlichen pfeilförmigen Ansätzen den Verbindungsanker zusätzlich zentrierend aufnimmt, sodass der Verriegelungskeil und der Verbindungsanker sich gegenseitig in dem oberen Profil abstützend halten.

In weiterer besonderer Ausgestaltung der Erfindung ist vorgesehen, dass der Verbindungsanker zwischen zwei geraden oder gebogenen Aluminiumprofilen, welche jeweils mindestens eine offene Kammer mit Befestigungselementen aufweisen, angeordnet ist. Die gebogenen Aluminiumprofile können dabei beispielsweise der Befestigung von flachen Dachelementen, wie z. B. Lichtbändem und -kuppeln, dienen, so dass eine sehr stabile Befestigung der beiden Profile erforderlich ist. Der Verbindungsanker greift zu diesem Zweck in die beiden offenen Kammern der Profile ein und stellt mit seinen korrespondierenden Befestigungsmitteln eine form- und kraftschlüssige Verbindung zu den Befestigungselementen her. Dabei kann ein Profil, beispielsweise das Deckprofil, eine quer zur Längsachse des Verbindungsankers angeordnete, rechteckförmige Kammer und eine Öffnung aufweisen, wobei sich an den Rändern der Öffnung einstückig und rechtwinklig an das Profil angeformte, gerade und ebene Leisten befinden, weiche von den Hakenbereichen des Verbindungsankers hintergriffen sind. Das andere Profil, beispielsweise das feststehende Auflageprofil, kann eine parallel zur Längsachse des Verbindungsankers angeordnete, pfeilförmige und an einem Ende offene Kammer mit innenliegender, aus Zähnen und Nuten bestehender Verzahnung aufweisen, in die die Haltekrallen des Verbindungselementes im ausgeklappten Zustand einrasten. Durch diese besonders vorteilhafte Ausgestaltung der Profile in Verbindung mit der bereits beschriebenen Form des Verbindungsankers kann eine sehr stabile Konstruktion hergestellt werden, die sehr hohen Belastungen standhält und Auszugswerte von 120 kg erreicht.

Das Einführen des Verbindungsankers in das Profil und die Stabilität der Befestigung kann insbesondere dadurch erhöht werden, dass die Zähne der Verzahnung schräg von der Öffnung der Kammer abgewendet und die Haltekrallen des Verbindungselementes schräg in entgegengesetzter Richtung ausgerichtet sind und die Haltekrallen im eingerasteten Zustand innerhalb der Nuten angeordnet sind.

Die erfindungsgemäße Vorrichtung kann zur Verbindung zweier Profile zum Zwecke der Einfassung und Befestigung von ebenen oder gebogenen, lichtdurchlässigen oder -undurchlässigen, beweglichen oder unbeweglichen Dachelementen vorgesehen sein.

Die Erfindung wird im weiteren anhand der Figuren näher erläutert.

Es zeigt
- Figur 1: eine Seitenansicht eines Verbindungsankers im Einbauzustand zwischen zwei Bauelementen,
- Figur 2: eine Seitenansicht des Verbindungsankers aus Figur 1 vor der Montage,
- Figur 3: eine Vorderansicht des Verbindungsankers gemäß Figur 2,
- Figur 4: eine geschnittene Seitenansicht eines zwischen zwei Bauelementen eingesetzten Verbindungsankers,
- Figur 5: in einer geschnittenen Ansicht den Verbindungsanker mit Verriegelungskeil nach der Montage und
- Figur 6: zeigt in einer Draufsicht einen zwischen dem Verbindungsanker liegenden Verriegelungskeil ohne Abdeckprofil.

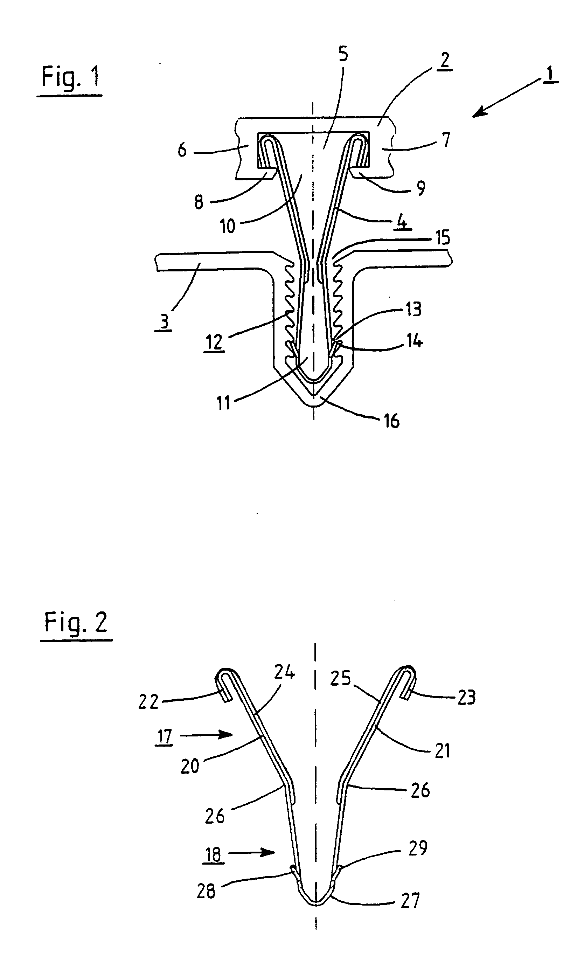

Figur 1 zeigt eine Vorrichtung 1 zur Befestigung von Bauelementen 2,3 bestehend aus einem oberen Bauelement 2, welches beispielsweise ein Deckprofil sein kann, einem Bauelement 3, welches beispielsweise ein feststehendes Auflageprofil sein kann, und einem Verbindungsanker 4. Das obere Bauelement 2 kann beispielsweise aus einem geraden oder gebogenen Profil bestehen, welches eine rechteckförmige Kammer 5 aufweist, die seitlich durch die beiden Seitenwände 6,7 begrenzt ist. Die Seitenwände 6,7 weisen an ihrem freien Ende jeweils eine einstückig angeformte, rechtwinklig angeordnete Leiste 8,9 auf. Die beiden geraden und ebenen Leisten 8,9 begrenzen eine mittig angeordnete Öffnung 10, so dass die Kammer 5 nach unten im wesentlichen offen ist. Das untere Bauelement 3, das ebenfalls aus einem geraden oder gebogenen Profil bestehen kann, weist eine senkrechte, annähernd rechteckförmige Kammer 11 auf, die nach oben offen ist. Die Kammer weist an ihrer Innenfläche eine raststufenartige Verzahnung 12 auf, die aus Zähnen 13 und Nuten 14 besteht. Die Zähne 13 sind dabei schräg abwärts, d. h. von der Öffnung 15 abgewendet, ausgerichtet. Die Kammer 11 ist an dem der Öffnung 15 gegenüberliegenden Ende 16 zulaufend ausgebildet. Die beiden Bauelemente bzw. Profile 2,3 sind über die Länge verteilt mit mehreren Verbindungsankern 4 miteinander verbunden.

Figur 2 zeigt den Verbindungsanker 4 bestehend aus einem flachen Blech, welches im wesentlichen in zwei Abschnitte 17,18 unterteilt ist. Der erste Abschnitt 17 besteht aus zwei V-förmig zueinander angeordneten Schenkeln 20,21, die federartig gegeneinander bewegbar sind. An ihren oberen, freien Enden weisen die Schenkel 20,21 jeweils Befestigungsmittel in Form von Hakenbereichen 22,23 auf. Die Hakenbereiche 22,23 bestehen aus den U-förmig nach außen gebogenen freien Enden der Schenkel 20,21. Im ersten Abschnitt 17 weisen die Schenkel 20,21 ferner Aussteifungssicken 24,25 auf, die den Verbindungsanker 4 zusätzlich stabilisieren. Die Schenkel 20,21 weisen an ihren freien Enden den größten Abstand voneinander auf und laufen nach unten V-förmig aufeinander zu, wobei sie im ersten Abschnitt 17 einen inneren Winkel von ca. 52° bilden. Im Übergangsbereich 26 zum zweiten Abschnitt 18 knicken die Schenkel 20,21 leicht ab, so dass sich ihr innerer Winkel auf 14° verringert. Die Schenkel 20,21 laufen im zweiten Abschnitt 18 weiter aufeinander zu und sind am Ende 27 des Verbindungsankers 4 einstückig miteinander verbunden. In unmittelbarer Nähe des Endes 27 sind an den Schenkeln 20,21 jeweils aus der Ebene der Schenkel 20,21 herausgeklappte Haltekrallen 28,29 sichtbar. Diese Haltekrallen 28,29 dienen der Verankerung des Verbindungsankers 4 in der Verzahnung 12 des Bauelements 3. Wie ersichtlich besteht der Verbindungsanker 4 aus einem einzigen gebogenen Blech. Es kann aber auch aus mehreren Teilen zusammengesetzt sein, wobei die Teile beispielsweise miteinander verschweißt sein können.

Aus Figur 1 ist erkennbar, dass der Verbindungsanker 4 sowohl mit dem Bauelement 2 als auch mit dem Bauelement 3 eine stabile Verbindung eingeht, so dass auf diese Weise das Bauelement 2 auf dem Bauelement 3 befestigt werden kann. Dabei hintergreifen auf der einen Seite die Hakenbereiche 22,23 die Leisten 8,9 des Bauelementes 2. Auf der gegenüberliegenden Seite greifen die Haltekrallen 28,29 in die Verzahnung 12 des Bauelements 3 ein, wobei die Haltekrallen 28,29 in den Nuten 14 der Verzahnung 12 angeordnet sind und somit den jeweils darüber liegenden Zahn 13 hintergreifen. Auf diese Weise ist der Verbindungsanker 4 an beiden Enden sehr stabil mit den jeweiligen Bauelementen 2,3 verbunden, so dass diese stabil miteinander befestigt sind. Zwischen den Bauelementen 2,3 können beispielsweise flache Elemente, wie Glasscheiben, Lichtbänder oder lichtundurchlässige Dachelemente, angeordnet sein. So kann das Bauelement 3 beispielsweise ein feststehendes Auflageprofil als Bestandteil eines Dachs sein, auf dem die flachen Elemente aufliegen. Durch die Befestigung des Bauelementes 2, beispielsweise ein Deckprofil, mittels des Verbindungsankers 4, können die flachen Elemente sicher zwischen den beiden Bauelementen 2,3 gehalten werden, wobei das Deckprofil die Lücke zwischen den zwei flachen Elementen überdeckt. Bei der Montage werden die beiden federnden Schenkel 20,21 einfach zusammengedrückt, so dass die freien Enden der Schenkel 20,21 des Verbindungsankers 4 in die Öffnung 10 des Bauelementes 2 eingeführt werden können. Nach Zurückschnappen der Schenkel 20,21 in die Ausgangsstellung liegen dann die Hakenbereiche 20,23 auf den Leisten 8,9 auf und verankern so den Verbindungsanker 4 in dem Bauelement 2. Dabei verringert sich der Winkel zwischen den Schenkeln 20,21, so dass diese unter nach außen gerichteter Vorspannung stehen, was ein Herausgleiten des Verbindungsankers 4 aus dem Bauelement 2 verhindert. Das Bauelement 2 wird dann auf dem Bauelement 3 durch einfaches Einschieben des Endes 27 des Verbindungsankers 4 in die Öffnung 15 des Bauelements 3 befestigt. Dabei rasten die Haltekrallen 28,29 in die Nuten 14 der Verzahnung 12 ein. Die Stärke der zwischen den Bauelementen 2,3 angeordneten Glasscheiben oder Dachelemente bestimmt dabei die Eindringtiefe des Endes 27 in die Kammer 11. Je feiner dabei die Verzahnung 12 des Bauelementes 3 ist, umso präziser kann dabei das Bauelement 2 auf den zwischenliegenden, flachen Elementen befestigt werden. In jedem Fall gewährleistet der erfindungsgemäße Verbindungsanker 4 eine äußerst stabile und hoher Beanspruchungen standhaltende Befestigung der Profile bzw. flachen Elemente. Bei der Vormontage der Verbindungsanker 4 kann es erforderlich sein, dass diese auf Grund der vorhandenen Länge des obenliegenden Bauelementes 2 versetzt werden müssen. Dies kann beispielsweise dadurch geschehen, dass die Schenkel 20,21 einfach zusammengedrückt werden, worauf die Hakenbereiche 22,23 aus der Kammer 5 herausrutschen.

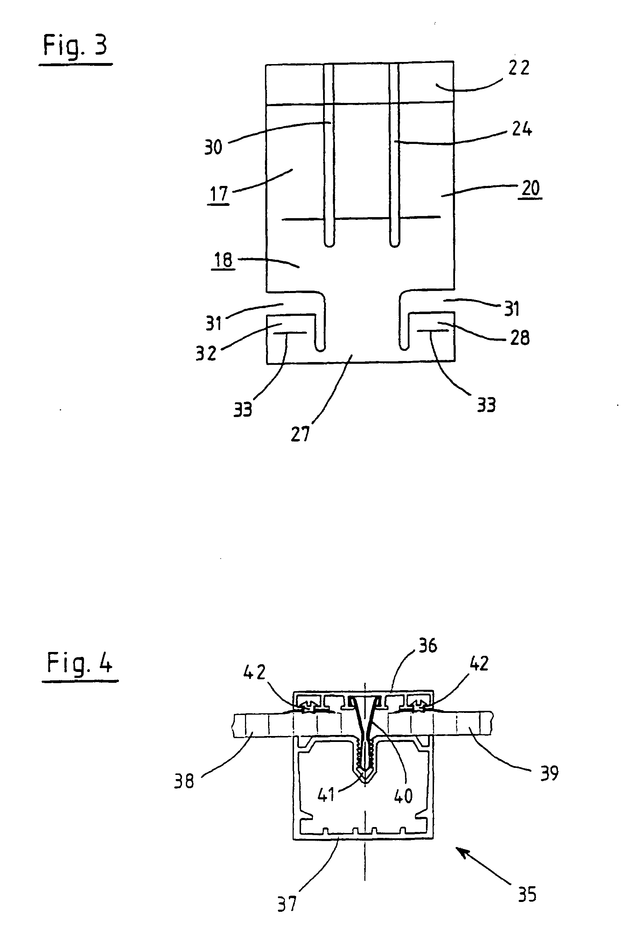

Figur 3 zeigt eine um 90° gedrehte Ansicht des Verbindungsankers 4 aus Figur 2. Der hier sichtbare Schenkel 20 weist einen Hakenbereich 22 auf, der aus dem U-förmig umgebogenen freien Ende des Schenkels 20 besteht. Der Hakenbereich 22 und der erste Abschnitt 17 weisen zwei in Längsrichtung verlaufende Aussteifungssicken 24,30 auf, die sich über den Übergangsbereich 26 bis in den zweiten Abschnitt 18 erstrecken. Hierdurch erhält der Verbindungsanker 4 zusätzliche Stabilität. Der erste Abschnitt 17 ist im Übergangsbereich 26 einstückig mit dem zweiten Abschnitt 18 verbunden. Der zweite Abschnitt 18 weist im Bereich des Endes 27 Einschnitte 31 auf, durch die die Haltekrallen 28,32 gebildet werden. Der Schenkel 20 weist darüber hinaus in den Übergangsbereichen 33 zu den Haltekrallen 28,32 eine verringerte Materialstärke auf, so dass die Haltekrallen 28,32 leicht aus der Ebene des Schenkels 20 herausgeklappt bzw. gebogen werden können. Es wird somit deutlich, dass die Haltekrallen 28,32 jeweils paarweise pro Schenkel 20,21 am Verbindungsanker 4 vorhanden sein können. Jeder Verbindungsanker 4 kann demzufolge an seinem freien Ende über die gesamte Breite verlaufende Hakenbereiche 22,23 und am gegenüberliegenden Ende 27 beispielsweise vier Haltekrallen 28,32 aufweisen, wodurch die Haltekraft der Vorrichtung weiter verbessert wird.

Figur 4 zeigt die Seitenansicht einer Vorrichtung 35 mit zwischen zwei Profilen 36,37 gehaltenen Dachelementen 38,39. Der Verbindungsanker 40, der dem Verbindungsanker 4 aus den Figuren 1 bis 3 entspricht, verbindet das obere Deckprofil 36 mit dem unteren Auflageprofil 37. Auf dem Auflageprofil 37 liegen zwei flache Dachelemente 38,39 auf, die hier aus einer einfachen Stegplatte bestehen und beispielsweise Teil eines Lichtbandes sein können. Der Verbindungsanker 40 ist soweit in die Kammer 41 des Auflageprofils 37 eingeführt bzw. eingerastet, bis die Dachelemente 38,39 fest zwischen den Profilen 36,37 gehalten sind. Dabei wird die Vorrichtung 35 durch die beiden am Deckprofil 36 befestigten Lippendichtungen 42 zusätzlich abgedichtet. Der Verbindungsanker 40 kann in seiner Dimensionierung an unterschiedliche Stärken der Dachelemente 38,39 angepasst werden, wobei vor allem die Länge des Verbindungsankers 40 und die Winkel zwischen den beiden Schenkeln variabel sind.

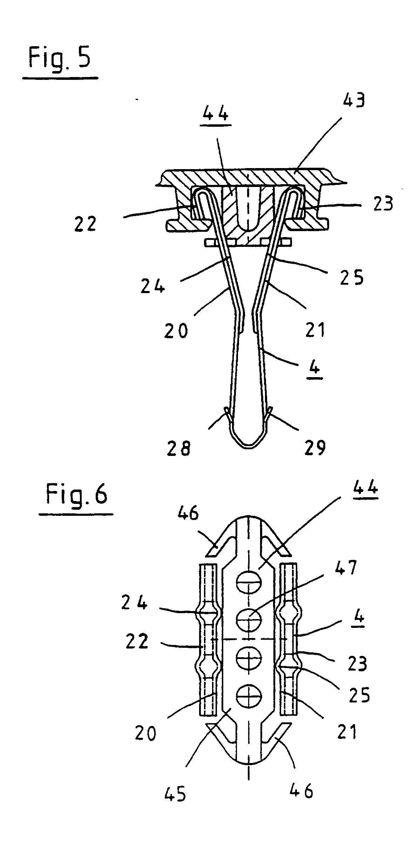

Figur 5 und 6 zeigt in einer Draufsicht ohne Deckprofil und in einer geschnittenen Seitenansicht mit Deckprofil 43 einen erfindungsgemäßen Verbindungsanker 4, gemäß den Figuren 1,2 und 3. Zwischen den oberen Schenkeln 20,21 des Verbindungsankers 4 ist bei diesem gezeigten Ausführungsbeispiel ein Verriegelungskeil 44 eingesetzt, welcher ein Verrutschen oder Herausfallen des Verbindungsankers 4 nach der Vormontage in dem oberen Deckprofil 43 zusätzlich verhindert. In der Praxis hat sich herausgestellt, dass die Monteure den Verbindungsanker 4, obwohl er relativ leicht in das obere Deckprofil 43 einsetzbar ist, nicht richtig einsetzen und auf Grund der vorgegebenen Länge des Deckprofils 43 und einem möglicherweise äußerst robusten Umgang mit dem Deckprofil 43 verrutschen und unter Umständen herausfallen können. Der Verriegelungskeil 44 ist zur Zentrierung und Sicherung des Verbindungsankers 4 vorgesehen, wobei der Verriegelungskeil 44 einen rechteckförmigen Grundkörper 45 aufweist, der zwischen den Schenkel 20,21 eingeklemmt ist. An den Grundkörper 45 sind seitlich pfeilförmige Ansätze 46 angeformt, welche im Weiteren eine Zentrierung des Verriegelungskeil 44 zwischen dem Verbindungsanker 4 vornehmen. Der Grundkörper 45 weist zur Material- und Gewichtseinsparung im gezeigten Ausführungsbeispiel im Weiteren vier Bohrungen 47 auf.

### Bezugszeichenliste

- 1: Vorrichtung
- 2: Bauelement/Profil
- 3: Bauelement/Profil
- 4: Verbindungsanker
- 5: Kammer
- 6: Seitenwand
- 7: Seitenwand
- 8: Leiste
- 9: Leiste
- 10: Öffnung
- 11: Kammer
- 12: Verzahnung
- 13: Zahn
- 14: Nut
- 15: Öffnung
- 16: Ende
- 17: Erster Abschnitt
- 18: Zweiter Abschnitt
- 20: Schenkel
- 21: Schenkel
- 22: Hakenbereich
- 23: Hakenbereich
- 24: Aussteifungssicke
- 25: Aussteifungssicke
- 26: Übergangsbereich
- 27: Ende
- 28: Haltekralle
- 29: Haltekralle
- 30: Aussteifungssicke
- 31: Einschnitt
- 32: Haltekralle
- 33: Übergangsbereich
- 35: Vorrichtung
- 36: Deckprofil
- 37: Auflageprofil
- 38: Dachelement
- 39: Dachelement
- 40: Verbindungsanker
- 41: Kammer
- 42: Lippendichtung
- 43: Deckprofil
- 44: Verrieglungskeil
- 45: Grundkörper
- 46: Ansatz
- 47: Bohrung

## Patentansprüche

1. Vorrichtung (1, 35) zur Verbindung zweier Profile (2, 3), insbesondere gebogener Profile für Verkleidungen, Fenster- und Türelemente, Dachklappen, Lichtbändern und -kuppeln, bestehend aus zumindest einem Verbindungsanker (4, 40), der so ausgebildet ist, dass er die wenigsten zwei Profile (2, 3) dadurch halten kann, dass er mit korrespondierenden Befestigungselementen in eine Verzahnung eines ersten Profils (3) eingreifen kann, wobei der Verbindungsanker (4, 40) aus zumindest zwei, federelastischen und an mindestens einem Punkt miteinander verbundenen Schenkeln (20, 21) besteht, welche an ihren freien Enden den größten Abstand voneinander aufweisen, wobei weitere Befestigungselemente für das zweite Profil (2) vorgesehen sind, und wobei
das den freien Enden der Schenkel (20, 21) gegenüberliegende Ende des Verbindungsankers (4, 40) mit zumindest einer angeformten elastisch bewegbaren Haltekralle (28, 29, 32) in der Nähe des Verbindungspunktes der Schenkel (20, 21) zum Einrasten in eine raststufenartige Verzahnung (12) des ersten Profils (3) eingreifen kann, **dadurch gekennzeichnet,**
**dass** die Schenkel (20,21) V-förmig sind.

2. Vorrichtung nach Anspruch 1,
**dadurch gekennzeichnet,**
**dass** der Verbindungsanker (4,40) als zweites Befestigungselement zumindest ein, vorzugsweise zwei, nach außen umgebogene Enden aufweist, welche in eine korrespondierende Ausnehmung des zweiten Profils (2) eingreifen können.

3. Vorrichtung nach Anspruch 1 oder 2,
**dadurch gekennzeichnet,**
**dass** der Verbindungsanker (4,40) zumindest einen ersten Abschnitt (17) und einen zweiten Abschnitt (18) aufweist, wobei der innere Winkel zwischen den annähernd V-förmigen zueinander angeordneten Schenkeln (20,21) im ersten (17) größer als im zweiten Abschnitt (18) ausgebildet ist.

4. Vorrichtung nach Anspruch 1, 2 oder 3,
**dadurch gekennzeichnet,**
**dass** jeder Schenkel (20, 21) an seinem freien Ende als Befestigungsmittel einen U-förmig nach außen gebogenen Hakenbereich (22, 23) aufweist und dass die Schenkel (20, 21) am gegenüberliegenden Ende (27) einstückig miteinander verbunden sind.

5. Vorrichtung nach Anspruch 3,
**dadurch gekennzeichnet,**
**dass** die Schenkel (20, 21) am Ende des zweiten Abschnitt (18) jeweils mit mindestens einer aus der Schenkelebene herausklappbaren und einstückig angeformten Haltekralle (28, 29, 32) versehen sind, wobei die Haltekrallen (28, 29, 32) eine rechteckige oder abgerundete Form aufweisen.

6. Vorrichtung nach Anspruch 3 oder 5,
**dadurch gekennzeichnet,**
**dass** die Schenkel (20, 21) an ihren freien Enden im ersten Abschnitt (17) den größten Abstand voneinander aufweisen, in Richtung des entgegengesetzten Endes (27) aufeinander zulaufen und dann den U-förmigen zweiten Abschnitt (18) bilden, wobei die Schenkel (20, 21) in beiden Abschnitten (17, 18) Winkel einschließen, die in Verbindung mit der entsprechenden Länge des Verbindungsankers (4, 40) an den benötigten Abstand zwischen den Profilen (2, 3) und die Ausgestaltung derselben angepasst sind.

7. Vorrichtung nach Anspruch 3, 5 oder 6,
**dadurch gekennzeichnet,**
**dass** der Verbindungsanker (4, 40) aus einem einstückigen, flachen und gebogenen Blech besteht, weiches im zweiten Abschnitt (18) Einschnitte (31) oder Ausstanzungen ausweist, die den freien Rändern der Haltekralle (28, 29, 32) entsprechen.

8. Vorrichtung nach Anspruch 3, 5, 6 oder 7,
**dadurch gekennzeichnet,**
**dass** die Schenkel (20, 21) ausschließlich oder zusätzlich im Übergangsbereich (26) zwischen erstem (17) und zweitem Abschnitt (18) miteinander verbunden sind.

9. Vorrichtung nach Anspruch 4 und 7,
**dadurch gekennzeichnet,**
**dass** das Blech zumindest eine, vorzugsweise zwei, in Längsrichtung verlaufende Aussteifungssicken (24, 25, 30) im Übergang zwischen ersten und zweiten Abschnitt (17, 18), in einem der Abschnitte (17, 18) und/oder im Hakenbereich (22, 23) aufweist.

10. Vorrichtung nach Anspruch 8 oder 9,
**dadurch gekennzeichnet,**
**dass** der Verbindungsanker (4, 40) aus Federstahl oder Aluminiumblech besteht.

11. Vorrichtung nach Anspruch 3, 5 oder 6,
**dadurch gekennzeichnet,**
**dass** der Verbindungsanker (4, 40) aus Kunststoff besteht, wobei ein Ende (27) des zweiten Abschnittes (18), welches dem ersten Abschnitt (17) abgewendet ist, Einschnitte (31) aufweist, die den freien Rändern der Haltekrallen (28, 29, 32) entsprechen.

12. Vorrichtung nach einem oder mehreren Ansprüche 1 bis 11,
**dadurch gekennzeichnet,**
**dass** der Verbindungsanker (4, 40) im Übergangsbereich (33) von den Schenkeln (20, 21) zu den Haltekrallen (28, 29, 32) eine verringerte Materialstärke durch eine Stanzung oder Einprägung aufweist.

13. Vorrichtung nach Anspruch 3, 5, 7, 8, 9 oder 11,
**dadurch gekennzeichnet,**
**dass** in dem ersten Abschnitt (17) nach der Montage im zweiten Profil zwischen den Enden des Verbindungsankers (4, 40) ein Verriegelungskeil (44) eingesetzt ist.

14. Vorrichtung nach Anspruch 13,
**dadurch gekennzeichnet,**
**dass** der Verriegelungskeil (44) aus einem rechteckförmigen Grundkörper (45) besteht, welcher zwischen den Schenkeln (20, 21) eingeklemmt ist und mit zwei seitlichen pfeilförmigen Ansätzen (46) den Verbindungsanker (4, 40) zentrierend aufnimmt.

15. Vorrichtung nach einem oder mehreren der Ansprüche 1 bis 14,
**dadurch gekennzeichnet,**
**dass** der Verbindungsanker (4, 40) zwischen zwei geraden oder gebogenen Aluminiumprofilen (2, 3), welche jeweils mindesten eine offene Kammer (5, 11, 41) mit Befestigungselementen aufweisen, anordenbar ist.

16. Vorrichtung nach Anspruch 4, 7 und 15,
**dadurch gekennzeichnet,**
**dass** ein Profil (2), beispielsweise ein Deckprofil als Befestigungselement, eine quer zur Längsachse des Verbindungsankers (4, 40) angeordnete, rechteckförmige Kammer (5) und eine Öffnung (10) aufweist, wobei sich an den Rändern der Öffnung (10) einstückig an das Profil (2) angeformte, gerade und ebene Leisten (8, 9) befinden, welche von den Hakenbereichen (22, 23) des Verbindungsankers (4, 40) hintergreifbar sind.

17. Vorrichtung nach Anspruch 15 oder 16,
**dadurch gekennzeichnet,**
**dass** ein Profil (3), beispielsweise ein feststehendes Auflageprofil als Befestigungselement, eine parallel zur Längsachse des Verbindungsanker (4, 40) angeordnete, pfeilförmige und an einem Ende (16) offene Kammer (11, 41) mit innenliegender, aus Zähnen (13) und Nuten (14) bestehender Verzahnung (12) aufweist, in die die Haltekrallen (28, 29, 32) des Verbindungsanker (4, 40) im ausgeklappten Zustand einrastbar sind.

18. Vorrichtung nach Anspruch 17,
**dadurch gekennzeichnet,**
**dass** die Zähne (13) der Verzahnung (12) schräg von der Öffnung (15) der Kammer (11, 41) abgewendet und die Haltekrallen (28, 29 40) des Verbindungsanker (4, 40) schräg in entgegengesetzter Richtung ausgerichtet und die Haltekrallen (28, 29, 32) im eingerasteten Zustand innerhalb der Nuten (14) anordenbar sind.

19. Vorrichtung nach einem oder mehreren der Ansprüche 1 bis 18,
**dadurch gekennzeichnet,**
**dass** diese zur Verbindung zweier Profile (2, 3) zum Zwecke der Einfassung und Befestigung von ebenen oder gebogenen, lichtdurchlässigen oder -undurchlässigen, beweglichen oder unbeweglichen Dachelementen (38, 39) vorgesehen ist.

## Claims

1. Device (1, 35) for joining two profile sections (2, 3), in particular curved profile sections for cladding, window and door elements, roof hatches, strip lighting elements and domelights, consisting of at least one connecting anchor (4, 40) configured so that it is able to hold the at least two profile sections (2, 3) by engaging by corresponding fastening elements in toothing on a first profile section (3), wherein the connecting anchor (4, 40) consists of at least two elastic legs (20, 21) joined to each other at at least one point and having their greatest divergence from each other at their free ends, wherein further fastening elements are provided for the second profile section (2), and wherein the end of the connecting anchor (4, 40) opposite the free ends of the legs (20, 21) is able to engage by at least one integrally formed elastically movable claw (28, 29, 32) near to the junction of the legs (20, 21) for snapping into ratchet-like toothing (12) on the first profile section (3),
**characterized in that**
the legs (20, 21) form a V.

2. Device according to Claim 1,
**characterized in that**
the connecting anchor (4, 40) has as second fastening element at least one, preferably two, ends bent over outwards which are able to engage in a corresponding recess in the second profile section (2).

3. Device according to Claim 1 or Claim 2,
**characterized in that**
the connecting anchor (4, 40) has at least one first portion (17) and one second portion (18), the internal angle between the legs (20, 21), which are arranged approximately in a V, being larger in the first portion (17) than in the second (18).

4. Device according to Claims 1, 2 or 3,
**characterized in that**
each leg (20, 21) has a hook region (22, 23) bent outwards in a U shape as fastening means, and **in that** the legs (20, 21) are joined together in one piece at the opposite end (27).

5. Device according to Claim 3,
**characterized in that**
the legs (20, 21) are each provided at the end of the second portion (18) with at least one integrally formed claw (28, 29, 32) able to protrude out of the plane of the leg, the claws (28, 29, 32) having a rectangular or rounded shape.

6. Device according to Claim 3 or Claim 5,
**characterized in that**
the legs (20, 21) have their greatest divergence from each other in the first portion (17) at their free ends, towards the opposite end (27) converge and then form the U-shaped second portion (18), the legs (20, 21) in the two portions (17, 18) including angles which, in conjunction with the corresponding length of the connecting anchor (4, 40), are adapted to the required distance between the profile sections (2, 3) and to the configuration of the latter.

7. Device according to Claims 3, 5 or 6,
**characterized in that**
the connecting anchor (4, 40) consists of a one-piece, flat and bent, sheet-metal part which has indentations (31) or punched slits in the second portion (18) corresponding to the free edges of the claws (28, 29, 32).

8. Device according to Claims 3, 5, 6 or 7,
**characterized in that**
the legs (20, 21) are solely or additionally joined to each other in the transition zone (26) between the first portion (17) and the second (18).

9. Device according to Claims 4 and 7,
**characterized in that**
the sheet-metal part has at least one, and preferably two, stiffening ribs (24, 25, 30) running in the longitudinal direction at the transition between first and second portions (17, 18), in one of the portions (17, 18), and/or in in the claw region (22, 23).

10. Device according to Claim 8 or Claim 9,
**characterized in that**
the connecting anchor (4, 40) is made of spring steel or aluminium sheet.

11. Device according to Claims 3, 5 or 6,
**characterized in that**
the connecting anchor (4, 40) is made of plastic material, an end (27) of the second portion (18) remote from the first portion (17) having indentations (31) corresponding to the free edges of the claws (28, 29, 32).

12. Device according to one or more Claims 1 to 11,
**characterized in that**
the connecting anchor (4, 40) has a thickness of material reduced by stamping or impressing in the zone of transition (33) from the legs (20, 21) to the claws (28, 29, 32).

13. Device according to Claims 3, 5, 7, 8, 9 or 11,
**characterized in that**
a locking key (44) is inserted between the ends of the connecting anchor (4, 40) in the first portion (17) after assembly with the second profile section.

14. Device according to Claim 13,
**characterized in that**
the locking key (44) consists of a rectangular base body (45) which is wedged between the legs (20, 21) and holds the connecting anchor (4, 40) centred by two lateral arrow-shaped extensions (46).

15. Device according to one or more of Claims 1 to 14,
**characterized in that**
the connecting anchor (4, 40) is arrangeable between two straight or curved aluminium profile sections (2, 3) which each have at least one open chamber (5, 11, 41) with fastening elements.

16. Device according to Claims 4, 7 and 15,
**characterized in that**
one profile section (2), for example a trim moulding as a fastening element, has a rectangular chamber (5) arranged transversely across the longitudinal axis of the connecting anchor (4, 40) and has an opening (10) at whose edges are located - integrally formed on the profile section (2) - straight, flat strips (8, 9) behind which the hook regions (22, 23) of the connecting anchor (4, 40) are engageable.

17. Device according to Claim 15 or Claim 16,
**characterized in that**
one profile section (3), for example a fixed bearing section as a fastening element, has an arrow-shaped chamber (11, 41) open at one end (16) and arranged parallel with the longitudinal axis of the connecting anchor (4, 40), with internal toothing (12) consisting of teeth (13) and grooves (14) into which the claws (28, 29, 32) of the connecting anchor (4, 40) are snap-engageable in the protruding condition.

18. Device according to Claim 17,
**characterized in that**
the teeth (13) of the toothing (12) are angled away from the opening (15) of the chamber (11, 41) and the claws (28, 29, 32) of the connecting anchor (4, 40) are angled the opposite way and the claws (28, 29, 32) are lodgeable inside the grooves (14) in the snapped-in condition.

19. Device according to one or more of Claims 1 to 18,
**characterized in that**
the device is intended for joining two profile sections (2, 3) for the purpose of framing and fixing flat or curved, transparent or opaque, movable or immovable roof elements (38, 39).

## Revendications

1. Dispositif (1, 35) pour le raccordement de deux profilés (2, 3), en particulier de profilés courbés pour des habillages, des éléments de fenêtre et de porte, des fenêtres tabatières, des rangées de fenêtres et des lumidômes, constitué d'au moins un grappin de raccordement (4, 40), qui est réalisé de telle sorte qu'il peut maintenir les deux profils (2, 3) au moins en ce qu'il peut s'engager avec des éléments de fixation correspondants dans une denture d'un premier profilé (3), où le grappin de raccordement (4, 40) est constitué d'au moins deux branches (20, 21) à déformation reliées l'une à l'autre à au moins un point, qui présentent à leurs extrémités libres le plus grand écartement entre elles, où des éléments de fixation supplémentaires sont prévus pour le deuxième profilé (2) et où l'extrémité du grappin de raccordement (4, 40) opposée à l'extrémité libre des branches (20, 21) peut s'engager avec au moins une griffe de retenue (28, 29, 32) mobile de façon élastique formée à proximité du point de raccordement des branches (20, 21) pour s'emboîter dans une denture (12) du type à encoches échelonnées du premier profilé (3), **caractérisé en ce que** les branches (20, 21) sont réalisées en forme de V.

2. Dispositif selon la revendication 1, **caractérisé en ce que** le grappin de raccordement (4, 40) présente comme deuxième élément de fixation au moins une, et de préférence deux extrémités courbées vers l'extérieur qui peuvent s'engager dans un évidement correspondant du deuxième profilé (2).

3. Dispositif selon l'une quelconque des revendications 1 ou 2, **caractérisé en ce que** le grappin de raccordement (4, 40) présente au moins une première section (17) et une deuxième section (18), l'angle intérieur entre les branches (20, 21) disposées sensiblement en forme de V l'une par rapport à l'autre est plus grand dans la première section (17) que dans la deuxième (18).

4. Dispositif selon l'une quelconque des revendications 1, 2 ou 3, **caractérisé en ce que** chaque branche (20, 21) présente à son extrémité libre comme moyen de fixation une zone de crochet (22, 23) courbée vers l'extérieur en forme de U, et **en ce que** les branches (20, 21) sont raccordées d'une seule pièce l'une à l'autre à l'extrémité opposée (27).

5. Dispositif selon la revendication 3, **caractérisé en ce que** les branches (20, 21) sont chacune munies à l'extrémité de la deuxième section (18) d'au moins une griffe de retenue (28, 29, 32) formée d'une seule pièce et pouvant être dépliée à l'extérieur du plan de la branche, les griffes de retenue (28, 29, 32) présentant une forme rectangulaire ou arrondie.

6. Dispositif selon l'une quelconque des revendications 3 ou 5, **caractérisé en ce que** les branches (20, 21) présentent le plus grand écartement entre elles au niveau de leurs extrémités libres dans la première section (17), s'étendent l'une vers l'autre dans la direction de l'extrémité opposée (27) et forment ensuite la deuxième section (18) en forme de U, les branches (20, 21) formant dans les deux sections (17, 18) des angles qui sont adaptés en relation avec la longueur correspondante du grappin de raccordement (4, 40) à l'écartement nécessaire entre les profilés (2, 3) et à la réalisation de ceux-ci.

7. Dispositif selon l'une quelconque des revendications 3, 5 ou 6, **caractérisé en ce que** le grappin de raccordement (4, 40) est constitué d'une tôle d'une seule pièce, plate et courbée, qui présente dans la deuxième section (18) des incisions (31) ou des poinçons qui correspondent aux bords libres de la griffe de retenue (28, 29, 32).

8. Dispositif selon l'une quelconque des revendications 3, 5, 6 ou 7, **caractérisé en ce que** les branches (20, 21) sont raccordées l'une à l'autre exclusivement ou de façon complémentaire dans la zone de transition (26) entre la première section (17) et la deuxième (18).

9. Dispositif selon les revendications 4 et 7, **caractérisé en ce que** la tôle présente au moins une, et de préférence deux moulures de renforcement (24, 25, 30) s'étendant dans la direction longitudinale au niveau de la transition entre les première et deuxième sections (17, 18) dans l'une des sections (17, 18) et/ou dans la zone de crochet (22, 23).

10. Dispositif selon l'une quelconque des revendications 8 ou 9, **caractérisé en ce que** le grappin de raccordement (4, 40) est constitué d'aciers à ressorts ou de tôle d'aluminium.

11. Dispositif selon l'une quelconque des revendications 3, 5 ou 6, **caractérisé en ce que** le grappin de raccordement (4, 40) est constitué de matériau plastique, une extrémité (27) de la deuxième section (18) qui est opposée à la première section (17) présentant des incisions (31) qui correspondent aux bords libres des griffes de retenue (28, 29, 32).

12. Dispositif selon l'une ou plusieurs des revendications 1 à 11, **caractérisé en ce que** le grappin de raccordement (4, 40) présente dans la zone de transition (33) des branches (20, 21) aux griffes de retenue (28, 29, 32) une épaisseur de matériau réduite par un poinçonnage ou un estampage.

13. Dispositif selon l'une quelconque des revendications 3, 5, 7, 8, 9 ou 11, **caractérisé en ce qu'**une cale de verrouillage (44) est insérée dans la première section (17) après le montage dans le deuxième profilé entre les extrémités du grappin de raccordement (4, 40).

14. Dispositif selon la revendication 13, **caractérisé en ce que** la cale de verrouillage (44) est constituée d'un corps de base rectangulaire (45) qui est serré entre les branches (20, 21) et reçoit le grappin de raccordement (4, 40) avec un effet de centrage avec deux pièces rapportées latérales en forme de flèche (46).

15. Dispositif selon l'une ou plusieurs des revendications 1 à 14, **caractérisé en ce que** le grappin de raccordement (4, 40) peut être disposé entre deux profilés en aluminium droits ou courbés (2, 3), qui présentent chacun au moins un compartiment ouvert (5, 11,41) avec des éléments de fixation.

16. Dispositif selon les revendications 4, 7 et 15, **caractérisé en ce qu'**un profilé (2), par exemple un profilé de couverture, présente comme élément de fixation un compartiment rectangulaire (5) disposé transversalement à l'axe longitudinal du grappin de raccordement (4, 40) et une ouverture (10), sachant que des listels droits et lisses (8, 9), formés d'une seule pièce sur le profilé (2), qui peuvent être engagés par l'arrière par les zones de crochet (22, 23) du grappin de raccordement (4, 40), se trouvent sur les bords de l'ouverture (10).

17. Dispositif selon l'une quelconque des revendications 15 ou 16, **caractérisé en ce qu'**un profilé (3), par exemple un profilé de support stationnaire, présente comme élément de fixation un compartiment (11, 41) disposé parallèlement à l'axe longitudinal du grappin de raccordement (4, 40), en forme de flèche et ouvert à une extrémité (16) avec une denture (12) située à l'intérieur, constituée de dents (13) et de rainures (14), dans laquelle les griffes de retenue (28, 29, 32) du grappin de raccordement (4, 40) peuvent s'emboîter dans la position dépliée.

18. Dispositif selon la revendication 17, **caractérisé en ce que** les dents (13) de la denture (12) sont dirigées en oblique depuis l'ouverture (15) du compartiment (11, 41), les griffes de retenue (28, 29, 32) du grappin de raccordement (4, 40) sont orientées en oblique dans la direction opposée et les griffes de retenue (28, 29, 32) dans la position emboîtée peuvent être disposées à l'intérieur des rainures (14).

19. Dispositif selon l'une ou plusieurs des revendications 1 à 18, **caractérisé en ce qu'**il est prévu pour le raccordement de deux profilés (2, 3) aux fins de l'encadrement et de la fixation d'éléments de toit (38, 39) droits ou courbés, translucides ou opaques, mobiles ou fixes.
